# EUROPEAN PATENT SPECIFICATION

(11) **EP 4 303 275 B1**
(45) Date of publication and mention of the grant of the patent: **25.11.2026**
(21) Application number: 22763083.7
(22) Date of filing: 24.02.2022
(51) Int. Cl.: C09D 5/16, C09D 133/14, C09D 7/61

(54) **ANTIFOULING COATING MATERIAL COMPOSITION**
ANTIFOULING-BESCHICHTUNGSMATERIALZUSAMMENSETZUNG
COMPOSITION DE MATÉRIAU DE REVÊTEMENT ANTISALISSURE

(30) Priority: 02.03.2021 JP 2021032961
(43) Date of publication of application: 10.01.2024
(73) Proprietor: Nitto Kasei Co., Ltd., Osaka-shi Osaka 533-0031 (JP)
(72) Inventor: YASUI, Takuya, Osaka-shi, Osaka 533-0031 (JP); KITAMURA, Hitoshi, Osaka-shi, Osaka 533-0031 (JP); WAKU, Hidenori, Osaka-shi, Osaka 533-0031 (JP); MATSUKI, Takashi, Osaka-shi, Osaka 533-0031 (JP); OKA, Nagato, Osaka-shi, Osaka 533-0031 (JP); ITO, Motomichi, Osaka-shi, Osaka 533-0031 (JP)
(74) Representative: Gulde & Partner
(86) International application number: PCT/JP2022/007516
(87) International publication number: WO 2022/186027

(56) References cited:
- WO-A1-03/080747
- WO-A1-2020/045211
- JP-A- 2003 119 419
- JP-A- 2013 509 460
- JP-A- S5 847 066
- ROONEY THOMAS R. ET AL: "Polylactic acid macromonomer radical propagation kinetics and degradation behaviour,", REACTION CHEMISTRY & ENGINEERING, vol. 2, no. 4, 25 April 2017 (2017-04-25), pages 487 - 497, XP055930569, ISSN: 2058-9883, DOI: 10.1039/C7RE00019G
- ROONEY THOMAS R. ET AL: "Polyester Macromonomer Syntheses and Radical Copolymerization Kinetics with Styrene", MACROMOLECULES, vol. 50, no. 3, 18 January 2017 (2017-01-18), US, pages 784 - 795, XP055930571, ISSN: 0024-9297, DOI: 10.1021/acs.macromol.6b02297

## Description

### TECHNICAL FIELD

The present invention relates to an antifouling coating composition.

### BACKGROUND ART

Aquatic fouling organisms such as barnacles, tubeworms, common mussels, *Bugula neritina,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (see JP S63 61989 B, JP 2003 119420 A, JP 2003 119419 A, Japanese Patent No. 2002-3776).

However, the antifouling coating films comprising (meth)acrylic acid alkoxycarbonylmethyl ester group-containing polymer disclosed in JP S63 61989 B, JP 2003 119420 A, JP 2003 119419 A or Japanese Patent No. 2002-3776 are difficult to exhibit antifouling property over a long period of time due to its extremely low coating film dissolubility.

In order to solve these problems, there has been proposed a technique for dissolving and allowing the coating film to exhibit antifouling performance over a long period of time as disclosed in WO 2020/045211 A1. Further examples may be found in WO 03/080747 A1.

### SUMMARY OF INVENTION

### TECHNICAL PROBLEM

Although the antifouling coating film comprising the antifouling coating composition disclosed in WO 2020/045211 A1 has improved coating film dissolubility, there is a problem in that drying of the coating film becomes insufficient in situations where sufficient drying time cannot be taken during coating film formation.

The present invention has been made in view of such circumstances, and provides an antifouling coating composition having a high drying property and capable of maintaining excellent coating film surface condition and antifouling performance over a long period of time.

### SOLUTION TO PROBLEM

According to the present invention, there is provided an antifouling coating composition comprising a copolymer A and an antifouling agent, wherein the copolymer A is a copolymer of a monomer (a) represented by the following general formula (1) and an ethylenically unsaturated monomer (b) other than the monomer (a), and the monomer (a) comprises a compound represented by general formula (1) in which n is 2 or more, and the copolymer A has a weight-average molecular weight of 5,000 to 25,000.

As a result of diligent research to solve the above problems, the present inventors have found that the composition comprising the copolymer A and the antifouling agent can solve the above problems and have completed the present invention.

### DESCRIPTION OF EMBODIMENTS

The present invention will be described in detail below.

### 1. Compositional Feature of Antifouling Coating Composition

An antifouling coating composition of the present invention contains a copolymer A and an antifouling agent.

### 1-1. Copolymer A

The copolymer A is a copolymer of a monomer (a) and an ethylenically unsaturated monomer (b) other than the monomer (a), and contains monomer units derived from the monomer (a) and the monomer (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### 1-1-1. Monomer (a)

The monomer (a) is represented by general formula (1).

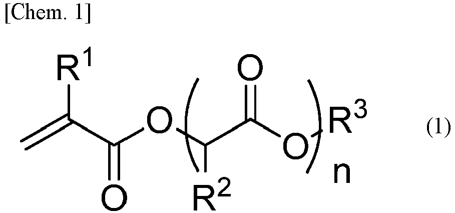

In the formula, R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

R² is preferably hydrogen or a methyl group.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

n represents an integer of 1 to 10, and n is, for example, 1, 2, 3, 4, 5, 6, 7, 8, 9, or 10, and may be within the range between any two numerical values exemplified here.

The monomer (a) contains a compound represented by general formula (1) in which n is 2 or more. When the compound in which n is 2 or more is contained as the monomer (a), the coating film dissolubility is increased. The monomer (a) may only be constituted by a compound in which n is 2 or more, or may be a mixture of a compound in which n is 1 and a compound in which n is 2 or more.

The monomer (a) is constituted by a monomer (a1) and a monomer (a2). The content of the monomer (a1) in the monomer (a) is 50 to 80% by mass. Preferably the content of the monomer (a1) in the monomer (a) is 55 to 75% by mass, and particularly preferably 60 to 70% by mass. The monomer (a1) has the property of increasing the coating film strength and decreasing the coating film dissolubility as compared with the monomer (a2). Therefore, when the content of the monomer (a1) is too small, the strength of the coating film tends to decrease, and the coating film surface condition may deteriorate after a long period of time. On the other hand, when the content of the monomer (a1) is too large, the coating film dissolubility decreases, and the antifouling performance may deteriorate.

### <Monomer (a1)>

The monomer (a1) is a compound represented by general formula (1) in which n is 1 and represented by general formula (2).

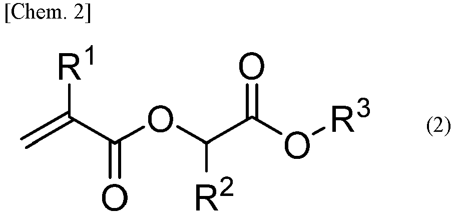

The descriptions of R¹ to R³ in general formula (2) are the same as in general formula (1).

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (1) in which n is 2 or more. n in general formula (1) is preferably 2 to 6 from the viewpoint of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and more preferably 0.5 to 0.7. In this case, stable dissolution of the coating film tends to continue. Specifically, the value is, for example, 0.40, 0.45, 0.50, 0.55, 0.60, 0.65, 0.70, 0.75, or 0.80, and may be within the range between any two numerical values exemplified here.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, and poly[1-(oxypolycarbonylethyl)] ethyl (meth)acrylate.

### 1-1-2. Monomer (b)

The monomer (b) is an ethylenically unsaturated monomer other than the monomer (a). The monomer (b) can be classified into a monomer (b1) and a monomer (b2), and the monomer (b) used in the polymerization of the copolymer A contains one or both of the monomer (b1) and the monomer (b2).

### <Monomer (b1)>

The monomer (b1) is represented by general formula (3).

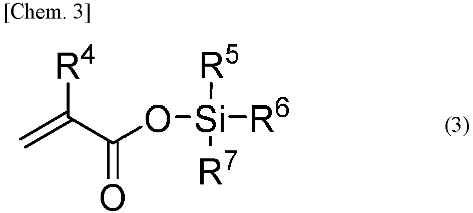

In the formula, R⁴ is hydrogen or a methyl group, and R⁵ to R⁷ are the same as or different from each other and each represent a branched alkyl group having 3 to 8 carbon atoms or a phenyl group.

The number of carbon atoms in the branched alkyl group is, for example, 3, 4, 5, 6, 7, or 8, and may be within the range between any two numerical values exemplified here. Examples of the branched alkyl group include an isopropyl group, an isopropenyl group, an isobutyl group, a s-butyl group, a t-butyl group, a 1-ethylpropyl group, a 1-methylbutyl group, a 1-methylpentyl group, a 1,1-dimethylpropyl group, a 1,1-dimethylbutyl group, a hexyl group, a cyclohexyl group, a 1,1-dimethylpentyl group, a 1-methylhexyl group, a 1,1-dimethylhexyl group, a 1-methylheptyl group, a 2-methylbutyl group, a 2-ethylbutyl group, a 2,2-dimethylpropyl group, a cyclohexylmethyl group, a 2-ethylhexyl group, a 2-propylpentyl group, and a 3-methylpentyl group. Preferred as R⁵ to R⁷ are the same as or different from each other and are an isopropyl group, an isopropenyl group, a s-butyl group, a t-butyl group, a phenyl group, and a 2-ethylhexyl group, and particularly preferred are an isopropyl group and a 2-ethylhexyl group.

Examples of the monomer (b1) include (meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylhexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (b1) may be used singly, or two or more thereof may be used in combination.

### <Monomer (b2)>

The monomer (b2) is the monomer (b) excluding the monomer (b1). In other words, the monomer (b2) is a monomer not represented by any of general formulas (1) to (3). Examples of the monomer (b2) include (meth)acrylic acid esters, vinyl compounds, aromatic compounds and dialkyl ester compounds of dibasic acids, which are not represented by general formulas (1) to (3). As used herein, (meth)acrylic acid esters mean acrylic acid esters or methacrylic acid esters.

Examples of (meth)acrylic acid esters not represented by general formulas (1) to (3) include (meth)acrylic acid esters, such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide.

Examples of the vinyl compounds include vinyl compounds having a functional group, such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the copolymer A, these monomers (b) may be used singly, or two or more thereof may be used in combination. From the viewpoint of coating film dissolubility and coating film property, the monomer (b) preferably contains a (meth)acrylic acid ester of the monomer (b1) or the monomer (b2). From the viewpoint of crack resistance, the monomer (b) preferably contains a (meth)acrylic acid ester of the monomer (b2), and more preferably contains methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate, or the like. From the viewpoint of coating film dissolubility, the monomer (b) preferably contains the monomer (b1), and more preferably contains triisopropylsilyl (meth)acrylate, t-butyldiphenylsilyl (meth)acrylate, tri-2-ethylhexylsilyl (meth)acrylate, or the like.

### 1-1-3. Physical Properties and Production Method of Copolymer A

The weight-average molecular weight (Mw) of the copolymer A is preferably 5,000 to 25,000. When the molecular weight is less than 5,000, the coating film formed of the antifouling coating material becomes fragile and easily peels off or cracks, and when the molecular weight exceeds 25,000, the viscosity of the coating material increases when the amount of volatile organic compounds (VOC) contained in the antifouling coating composition is small, and handling becomes difficult. Specifically, the Mw is, for example, 5,000, 7,500, 10,000, 12,500, 15,000, 17,500, 20,000, 22,500, or 25,000 and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a) and the monomer (b).

The copolymer A may be obtained, for example, by polymerizing the monomer (a) and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A. A chain transfer agent may also be used to adjust the molecular weight of the resulting polymer. Examples of the chain transfer agent include mercaptans such as n-dodecylmercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Antifouling Agent

Examples of antifouling agents include inorganic agents and organic agents.

Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine).

These antifouling agents may be used singly, or two or more thereof may be used in combination.

The content of the antifouling agent in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

### 1-3. Volatile Organic Compound (VOC)

The antifouling coating composition of the present invention preferably has a VOC content of less than 400 g/L. In this case, the amount of VOCs released into the environment during coating film formation is relatively small. The VOC content is, for example, 100 to 399 g/L, specifically, for example, 100, 150, 200, 250, 300, 310, 320, 330, 340, 350, 360, 370, 380, 390, or 399 g/L, and may be within the range between any two numerical values exemplified here.

The VOC content means a value calculated by the following method. First, the volatile matter (% by mass) in the subject sample is obtained in accordance with ASTM D2369-07. Next, the specific gravity of the subject sample at 25°C is obtained in accordance with ASTM D1475-98. Using the obtained specific gravity, the VOC content is obtained by converting the unit of volatile matter (% by mass) to g/L.

Specifically, 0.3 ± 0.1 g of the subject sample is collected, diluted with 3 ± 1 ml of toluene, and dried in a dryer at 110 ± 5°C for 1 hour. The volatile matter (% by weight) is obtained from the weight of the sample before and after drying. The specific gravity can be obtained using a specific gravity cup or a specific gravity bottle, and is measured at 25°C. VOC (g/L) is calculated using these volatile matter and specific gravity.

### 1-4. Other additives

If necessary, a resin component other than the copolymer A, a release modifier, a plasticizer, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include copolymer B and polymer P below.

The copolymer B is a copolymer of the monomer (b1) and the monomer (b2), and contains monomer units derived from the monomer (b1) and the monomer (b2). The content of the monomer (b1) with respect to the total of the monomer (b1) and the monomer (b2) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

The polymerization method, initiator, solvent, temperature, other conditions, Mw measurement method, and the like may be applied to the method described above for the copolymer A.

The content of the copolymer B in the composition of the present invention is not particularly limited, but the mass ratio (copolymer B/copolymer A) as the content ratio with respect to the copolymer A is usually 0 .1 to 0.9, and preferably 0.3 to 0.7, in terms of solid content. The mass ratio is, for example, 0.1, 0.2, 0.3, 0.4, 0.5, 0.6, 0.7, 0.8, or 0.9, and may be within the range between any two numerical values exemplified here.

The polymer P is a polymer obtained by polymerizing the monomer (b2).

In the present invention, these monomers (b2) may be used singly, or two or more thereof may be used in combination. In particular, from the viewpoint of compatibility with the copolymer A, preferred are methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, and the like.

The polymerization method, initiator, solvent, temperature, other conditions, Mw measurement method, and the like may be applied to the method described above for the copolymer A.

The content of the polymer P in the composition of the present invention is not particularly limited, but the mass ratio (polymer P/copolymer A) as the content ratio with respect to the copolymer A is usually 0.1 to 0.5, and preferably 0.1 to 0.3, in terms of solid content. The mass ratio is, for example, 0.1, 0.2, 0.3, 0.4, or 0.5, and may be within the range between any two numerical values exemplified here.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by Zeon Corporation).

Among these, preferred are rosin, rosin derivatives, naphthenic acid, versatic acid, trimethylisobutenylcyclohexenecarboxylic acid, and metal salts thereof.

Examples of the plasticizer include phosphate esters, phthalate esters, adipate esters, sebacate esters, polyesters, epoxidized soybean oil, alkyl vinyl ether polymer, polyalkylene glycols, t-nonyl pentasulfide, vaseline, polybutene, tris(2-ethylhexyl) trimellitate, silicone oil, and chlorinated paraffin. These may be used singly or in combination of two or more thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Physical Properties of Antifouling Coating Composition

The antifouling coating composition of the present invention preferably has a viscosity of 806 to 2205 mPa·s (80 to 110 KU) at 25°C. In this case, the antifouling coating composition is easy to handle, and the drying time during coating film formation is less likely to be long. Specifically, the viscosity is, for example, 806 mPa·s (80 KU), 956 mPa·s (85 KU), 1140 mPa·s (90 KU), 1350 mPa·s (95 KU), 1595 mPa·s (100 KU), 1900 mPa·s (105 KU), or 2205 mPa·s (110 KU), and may be within the range between any two numerical values exemplified here. Viscosity can be measured by the method shown in Examples.

### 3. Method for Producing Antifouling Coating Composition

The antifouling coating composition of the present invention may be produced, for example, by mixing and dispersing a mixed solution containing the copolymer A, the antifouling agent, other additives, and the like using a disperser.

The mixed solution is preferably prepared by dissolving or dispersing various materials such as the copolymer A and the antifouling agent in a solvent.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

The antifouling coating composition is preferably produced by mixing a solution of the copolymer A with an antifouling agent and/or other additives. In this case, the solution of the copolymer A preferably has a solid content of 55% by mass or more. When the solid content of the solution of the copolymer A is high, the amount of the solvent contained in the solution of the copolymer A is reduced, and the VOC content in the antifouling coating composition produced by using the solution of the copolymer A can be reduced. The solid content is, for example, 55 to 90% by mass, preferably 55 to 70% by mass, specifically, for example, 55, 60, 65, 70, 75, 80, 85, or 90% by mass, and may be within the range between any two numerical values exemplified here.

When the antifouling agent and/or the additive has poor dispersibility or solubility, it is preferable to use an additional solvent to pre-disperse or dissolve the antifouling agent and/or the additive to form a first liquid, and to mix the first liquid with the solution of the copolymer A. Thereby, dispersibility and/or dissolubility can be improved. When the VOC content in the antifouling coating composition is set to a specified value or less, the amount of solvent available for pre-dispersion or dissolution depends on the amount of solvent contained in the solution of the copolymer A. Therefore, by increasing the solid content of the copolymer A solution, the amount of solvent available for pre-dispersion or dissolution can be increased.

### 4. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### EXAMPLES

The features of the present invention will be further clarified by Examples and the like to be described below. The present invention, however, is not limited to these Examples and the like.

In each of Production Examples, Examples, and Comparative Examples, "%" represents "% by mass". The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF
The non-volatile matter is a value measured in accordance with JIS K 5601-1-2:1999 (ISO 3251:1993) "Testing Methods for Paint Components: Determination Of Non-Volatile matter".
The viscosity of the coating composition is a value measured at 25°C using a Stormer viscometer in accordance with JIS K 5400. The measurement conditions are as follows.
Stormer viscometer: Stormer viscometer NO.453, manufactured by Coating Tester Industry
Measurement temperature: 25 ± 0.5°C
Sample volume: 500 ml (filled to the marked line of a 500 ml sample can)
Weight: 75 to 1,000 g
Measurement method: the time until the rotor blade rotates 100 times is measured The measurement was performed by changing the weight, the value closest to 30 seconds in the range of 27 to 33 seconds of the time required for 100 rotations was selected and taken as the number of seconds of the time required for 100 rotations, and using the KU conversion amount obtained from the number of seconds of the time required for 100 rotations and the mass of the weight used, the KU value was obtained.

### 1. Production Example

### 1-1. Production Example of Monomer (a1)

### <Production Example 1 (Production of Monomer a1-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 2 to 7 (Production of Monomers a1-2 to a1-7)>

Monomers a1-2 to a1-7 were obtained by performing reactions in the same manner as in Production Example 1 using the raw materials shown in Table 1. The reaction conditions and yields of Production Examples 1 to 7 are shown in Table 1.

**[Table 1]**

| Table 1 | | | | | Raw material (g) | | | | | | | | | | Yield |
|---|---|---|---|---|---|---|---|---|---|---|---|---|---|---|---|
| Production Example | Monomer | R1 | R2 | R3 | CAMe | CAEt | CAiPr | CAnBu | CPAMe | AA | MAA | TEA | Ethyl acetate | MEHQ | (g) |
| 1 | a1-1 | H | H | Me | 109 | | | | | 72 | | 101 | 500 | 0.1 | 129.7 |
| 2 | a1-2 | H | H | Et | | 123 | | | | 72 | | 101 | 500 | 0.1 | 142.3 |
| 3 | a1-3 | Me | H | Me | 109 | | | | | | 86 | 101 | 500 | 0.1 | 142.3 |
| 4 | a1-4 | Me | H | Et | | 123 | | | | | 86 | 101 | 500 | 0.1 | 155.0 |
| 5 | a1-5 | H | H | iPr | | | 137 | | | 72 | | 101 | 500 | 0.1 | 155.0 |
| 6 | a1-6 | H | H | Bu | | | | 151 | | 72 | | 101 | 500 | 0.1 | 167.6 |
| 7 | a1-7 | H | Me | Me | | | | | 123 | 72 | | 101 | 500 | 0.1 | 142.3 |

### 1-2. Production Example of Monomer (a2)

### <Production Example 8 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methyl methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 9 to 42 (Production of Monomers a2-2 to a2-35)>

Monomers a2-2 to a2-35 shown in Table 2 were obtained by performing reactions in the same manner as in Production Example 8 using the raw materials shown in Tables 2 to 4. The reaction conditions and yields of Production Examples 8 to 42 are shown in Tables 2 to 4.

**[Table 2]**

| Table 2 | | | | | |
|---|---|---|---|---|---|
| Production Example | Monomer | R1 | R2 | R3 | n |
| 8 | a2-1 | H | H | Me | 2 |
| 9 | a2-2 | H | H | Et | 2 |
| 10 | a2-3 | Me | H | Me | 2 |
| 11 | a2-4 | Me | H | Et | 2 |
| 12 | a2-5 | H | H | iPr | 2 |
| 13 | a2-6 | H | H | Bu | 2 |
| 14 | a2-7 | H | Me | Me | 2 |
| 15 | a2-8 | H | H | Me | 3 |
| 16 | a2-9 | H | H | Et | 3 |
| 17 | a2-10 | Me | H | Me | 3 |
| 18 | a2-11 | Me | H | Et | 3 |
| 19 | a2-12 | H | H | iPr | 3 |
| 20 | a2-13 | H | H | Bu | 3 |
| 21 | a2-14 | H | Me | Me | 3 |
| 22 | a2-15 | H | H | Me | 4 |
| 23 | a2-16 | H | H | Et | 4 |
| 24 | a2-17 | Me | H | Me | 4 |
| 25 | a2-18 | Me | H | Et | 4 |
| 26 | a2-19 | H | H | iPr | 4 |
| 27 | a2-20 | H | H | Bu | 4 |
| 28 | a2-21 | H | Me | Me | 4 |
| 29 | a2-22 | H | H | Me | 5 |
| 30 | a2-23 | H | H | Et | 5 |
| 31 | a2-24 | Me | H | Me | 5 |
| 32 | a2-25 | Me | H | Et | 5 |
| 33 | a2-26 | H | H | iPr | 5 |
| 34 | a2-27 | H | H | Bu | 5 |
| 35 | a2-28 | H | Me | Me | 5 |
| 36 | a2-29 | H | H | Me | 6 |
| 37 | a2-30 | H | H | Et | 6 |
| 38 | a2-31 | Me | H | Me | 6 |
| 39 | a2-32 | Me | H | Et | 6 |
| 40 | a2-33 | H | H | iPr | 6 |
| 41 | a2-34 | H | H | Bu | 6 |
| 42 | a2-35 | H | Me | Me | 6 |

**[Table 3]**

| Table 3 | First reaction | | | | | | | | |
|---|---|---|---|---|---|---|---|---|---|
| | Raw material (g) | | | | | | | | Intermediate |
| Production Example | CANa | CPANa | CAMe | CAEt | CAiPr | CAnBu | CPAMe | NMP | Yield (g) |
| 8 | 215 | | 201 | | | | | 300 | 262 |
| 9 | 199 | | | 209 | | | | 300 | 269 |
| 10 | 215 | | 201 | | | | | 300 | 262 |
| 11 | 199 | | | 209 | | | | 300 | 269 |
| 12 | 188 | | | | 220 | | | 300 | 276 |
| 13 | 178 | | | | | 230 | | 300 | 284 |
| 14 | | 228 | | | | | 214 | 300 | 272 |
| 15 | 321 | | 150 | | | | | 300 | 260 |
| 16 | 305 | | | 160 | | | | 300 | 266 |
| 17 | 321 | | 150 | | | | | 300 | 260 |
| 18 | 305 | | | 160 | | | | 300 | 266 |
| 19 | 256 | | | | 150 | | | 300 | 231 |
| 20 | 247 | | | | | 160 | | 300 | 237 |
| 21 | | 287 | | | | | 135 | 300 | 231 |
| 22 | 384 | | 119 | | | | | 300 | 261 |
| 23 | 349 | | | 123 | | | | 300 | 252 |
| 24 | 384 | | 119 | | | | | 300 | 261 |
| 25 | 349 | | | 123 | | | | 300 | 252 |
| 26 | 332 | | | | 130 | | | 300 | 245 |
| 27 | 314 | | | | | 136 | | 300 | 245 |
| 28 | | 392 | | | | | 123 | 300 | 258 |
| 29 | 419 | | 98 | | | | | 300 | 258 |
| 30 | 373 | | | 98 | | | | 300 | 241 |
| 31 | 419 | | 98 | | | | | 300 | 258 |
| 32 | 382 | | | 100 | | | | 300 | 247 |
| 33 | 377 | | | | 111 | | | 300 | 248 |
| 34 | 373 | | | | | 120 | | 300 | 257 |
| 35 | | 418 | | | | | 98 | 300 | 245 |
| 36 | 437 | | 81 | | | | | 300 | 251 |
| 37 | 408 | | | 86 | | | | 300 | 246 |
| 38 | 443 | | 82 | | | | | 300 | 255 |
| 39 | 408 | | | 86 | | | | 300 | 246 |
| 40 | 396 | | | | 93 | | | 300 | 241 |
| 41 | 379 | | | | | 98 | | 300 | 241 |
| 42 | | 437 | | | | | 82 | 300 | 237 |

**[Table 4]**

| Table 4 | Second reaction | | | | | | |
|---|---|---|---|---|---|---|---|
| | Raw material (g) | | | | | | Yield |
| Production Example | Intermediate | AA | MAA | TEA | Ethyl acetate | MEHQ | (g) |
| 8 | 200 | 87 | | 122 | 500 | 0.1 | 230.6 |
| 9 | 200 | 80 | | 112 | 500 | 0.1 | 227.5 |
| 10 | 200 | | 103 | 122 | 500 | 0.1 | 230.6 |
| 11 | 200 | | 95 | 112 | 500 | 0.1 | 227.5 |
| 12 | 200 | 74 | | 104 | 500 | 0.1 | 224.8 |
| 13 | 200 | 69 | | 97 | 500 | 0.1 | 222.4 |
| 14 | 200 | 74 | | 104 | 500 | 0.1 | 224.8 |
| 15 | 200 | 64 | | 90 | 500 | 0.1 | 220.1 |
| 16 | 200 | 60 | | 85 | 500 | 0.1 | 218.3 |
| 17 | 200 | | 77 | 90 | 500 | 0.1 | 220.1 |
| 18 | 200 | | 72 | 85 | 500 | 0.1 | 218.3 |
| 19 | 200 | 57 | | 80 | 500 | 0.1 | 216.8 |
| 20 | 200 | 54 | | 76 | 500 | 0.1 | 215.4 |
| 21 | 200 | | 68 | 80 | 500 | 0.1 | 216.8 |
| 22 | 200 | 51 | | 72 | 500 | 0.1 | 232.8 |
| 23 | 200 | 49 | | 68 | 500 | 0.1 | 193.6 |
| 24 | 200 | | 61 | 72 | 500 | 0.1 | 193.8 |
| 25 | 200 | | 58 | 68 | 500 | 0.1 | 193.6 |
| 26 | 200 | 46 | | 65 | 500 | 0.1 | 193.4 |
| 27 | 200 | 44 | | 62 | 500 | 0.1 | 193.3 |
| 28 | 200 | | 55 | 65 | 500 | 0.1 | 193.4 |
| 29 | 200 | 42 | | 59 | 500 | 0.1 | 208.8 |
| 30 | 200 | 41 | | 57 | 500 | 0.1 | 177.0 |
| 31 | 200 | | 51 | 59 | 500 | 0.1 | 176.4 |
| 32 | 200 | | 49 | 57 | 500 | 0.1 | 177.0 |
| 33 | 200 | 39 | | 55 | 500 | 0.1 | 177.4 |
| 34 | 200 | 38 | | 53 | 500 | 0.1 | 177.9 |
| 35 | 200 | | 47 | 55 | 500 | 0.1 | 177.4 |
| 36 | 200 | 36 | | 51 | 500 | 0.1 | 191.8 |
| 37 | 200 | 35 | | 49 | 500 | 0.1 | 165.0 |
| 38 | 200 | | 43 | 51 | 500 | 0.1 | 164.1 |
| 39 | 200 | | 42 | 49 | 500 | 0.1 | 165.0 |
| 40 | 200 | 34 | | 47 | 500 | 0.1 | 165.8 |
| 41 | 200 | 33 | | 46 | 500 | 0.1 | 166.6 |
| 42 | 200 | | 40 | 47 | 500 | 0.1 | 165.8 |

The details of the raw materials in Tables 1 to 4 are as follows.
AA: acrylic acid
MAA: methacrylic acid
NMP: N-methyl-2-pyrrolidone
CANa: sodium monochloroacetate
CPANa: sodium 2-chloropropionate
CAMe: methyl chloroacetate
CAEt: ethyl chloroacetate
CAiPr: isopropyl chloroacetate
CAnBu: n-butyl chloroacetate
CPAMe: methyl 2-chloropropionate
MEHQ: 4-methoxyphenol
TEA: triethylamine

### 1-3. Production Example of Copolymer Solution

### <Production Example P1 (Production of Copolymer Solution A-1)>

Into a four-necked flask equipped with a thermometer, a condenser, a stirrer, and a dropping funnel, 40 g of xylene and 40 g of propylene glycol monomethyl ether were charged as solvents, nitrogen gas was introduced, and the mixture was stirred while maintaining the temperature 88°C. Then, a mixed solution of the monomer (a) and the monomer (b) in the amounts (g) shown in Table 5 and 3.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 5.

### <Production Examples P2 to P28 (Production of Copolymer Solutions A-2 to A-23, B-1, and R-1 to R-4)>

Copolymer solutions A-2 to A-23, B-1, and R-1 to R-4 were obtained by performing a polymerization reaction in the same manner as in Production Example P1 except that the monomers, polymerization initiators, and solvents shown in Tables 5 to 8 were used. The non-volatile matter and Mw of each polymer are shown in Tables 5 to 8. The unit of numerical values for the amounts of raw materials in the table is g.

**[Table 5]**

| Table 5 | | | Copolymer Solution Production Example | | | | | | | |
|---|---|---|---|---|---|---|---|---|---|---|
| | | | P1 | P2 | P3 | P4 | P5 | P6 | P7 | P8 |
| Monomer (a) | a1 | a1-1 | 30 | 37 | 47 | | | | | |
| | | a1-2 | | | | 53 | 30 | 40 | 47 | 40 |
| | a2 | a2-1 | 15 | 13 | 9 | | | | | |
| | | a2-2 | | | | 11 | 15 | 12 | 9 | 12 |
| | | a2-8 | 9 | 6 | 2 | | | | | |
| | | a2-9 | | | | 6 | 9 | 5 | 2 | 5 |
| | | a2-15 | 3 | 2 | 1 | | | | | |
| | | a2-16 | | | | 2 | 4 | 1 | 1 | 1 |
| | | a2-22 | 2 | 1 | 1 | | | | | |
| | | a2-23 | | | | 1 | 1 | 1 | 1 | 1 |
| | | a2-29 | 1 | 1 | | | | | | |
| | | a2-30 | | | | 1 | 1 | 1 | | 1 |
| Monomer (b) | b2 | methyl methacrylate | 22 | 40 | 30 | 22 | 35 | 30 | 35 | 30 |
| | | 2-methoxyethyl acrylate | 18 | | 5 | | 5 | 10 | 5 | |
| | | 2-methoxyethyl methacrylate | | | | 2 | | | | 10 |
| | | n-butyl acrylate | | | 5 | 2 | | | | |
| Total of monomers | | | 100 | 100 | 100 | 100 | 100 | 100 | 100 | 100 |
| Solvent | | xylene | 40 | 55 | 40 | 60 | 50 | 65 | 55 | 60 |
| | | 1-butanol | | 10 | | 20 | | | 15 | |
| | | butyl acetate | | | 35 | | 10 | | | 20 |
| | | propylene glycol monomethyl ether | 40 | | | | | 10 | | |
| Polymerization initiator (initial) | | 1,1,3,3-tetramethylbutylperoxy-2-ethylhexanoate | 3.0 | 1.9 | 1.4 | 3.3 | 3.7 | 2.7 | 1.9 | 3.4 |
| Polymerization initiator (post-added) | | 1,1,3,3-tetramethylbutylperoxy-2-ethylhexanoate | 0.1 × 3 | 0.1 × 3 | 0.1 × 3 | 0.1 × 3 | 0.1 × 3 | 0.1 × 3 | 0.1 × 3 | 0.1 × 3 |
| Weight-average molecular weight (Mw) | | | 12,000 | 19,000 | 22,000 | 9,900 | 6,600 | 13,000 | 17,500 | 8,100 |
| Non-volatile matter (%, 125°C, 1 hour) | | | 55.8 | 61.1 | 57.9 | 55.4 | 62.4 | 57.3 | 58.9 | 56.1 |
| Copolymer solution name | | | A-1 | A-2 | A-3 | A-4 | A-5 | A-6 | A-7 | A-8 |

**[Table 6]**

| Table 6 | | | Copolymer Solution Production Example | | | | | | | |
|---|---|---|---|---|---|---|---|---|---|---|
| | | | P9 | P10 | P11 | P12 | P13 | P14 | P15 | P16 |
| Monomer (a) | a1 | a1-3 | 30 | 40 | | | | | | |
| | | a1-4 | | | 54 | 30 | 40 | 47 | | |
| | | a1-5 | | | | | | | 30 | 40 |
| | a2 | a2-3 | 15 | 12 | | | | | | |
| | | a2-4 | | | 12 | 15 | 12 | 9 | | |
| | | a2-5 | | | | | | | 15 | 12 |
| | | a2-10 | 9 | 5 | | | | | | |
| | | a2-11 | | | 2 | 9 | 5 | 2 | | |
| | | a2-12 | | | | | | | 9 | 5 |
| | | a2-17 | 4 | 1 | | | | | | |
| | | a2-18 | | | 1 | 4 | 1 | 1 | | |
| | | a2-19 | | | | | | | 4 | 1 |
| | | a2-24 | 1 | 1 | | | | | | |
| | | a2-25 | | | 1 | 1 | 1 | 1 | | |
| | | a2-26 | | | | | | | 1 | 1 |
| | | a2-31 | 1 | 1 | | | | | | |
| | | a2-32 | | | | 1 | 1 | | | |
| | | a2-33 | | | | | | | 1 | 1 |
| Monomer (b) | b2 | methyl methacrylate | 40 | 30 | 20 | 30 | 30 | 30 | 30 | 30 |
| | | 2-methoxyethyl acrylate | | 5 | 10 | | 5 | 10 | | 10 |
| | | n-butyl acrylate | | 5 | | 10 | 5 | | 10 | |
| Total of monomers | | | 100 | 100 | 100 | 100 | 100 | 100 | 100 | 100 |
| Solvent | | xylene | 80 | 75 | 30 | 50 | 50 | 80 | 40 | 30 |
| | | 1-butanol | | | 30 | 30 | | | 35 | |
| | | butyl acetate | | | | | 30 | | | 30 |
| Polymerization initiator (initial) | | 1,1,3,3-tetramethylbutylperoxy-2-ethylhexanoate | 4.2 | 3.2 | 1.6 | 1.5 | 3.9 | 2.6 | 1.9 | 3.2 |
| Polymerization initiator (post-added) | | 1,1,3,3-tetramethylbutylperoxy-2-ethylhexanoate | 0.1 × 3 | 0.1 × 3 | 0.1 × 3 | 0.1 × 3 | 0.1 × 3 | 0.1 × 3 | 0.1 × 3 | 0.1 × 3 |
| Weight-average molecular weight (Mw) | | | 6,500 | 10,500 | 18,000 | 20,500 | 7,500 | 12,200 | 16,800 | 8,800 |
| Non-volatile matter (%, 125°C, 1 hour) | | | 55.9 | 57.7 | 62.9 | 55.8 | 56.1 | 55.9 | 57.4 | 62.7 |
| Copolymer solution name | | | A-9 | A-10 | A-11 | A-12 | A-13 | A-14 | A-15 | A-16 |

**[Table 7]**

| Table 7 | | | Copolymer Solution Production Example | | | | | | | |
|---|---|---|---|---|---|---|---|---|---|---|
| | | | P17 | P18 | P19 | P20 | P21 | P22 | P23 | P24 |
| Monomer (a) | a1 | a1-2 | | | | | | 15 | 19 | |
| | | a1-6 | 50 | 30 | 40 | | | | | |
| | | a1-7 | | | | 30 | 40 | | | |
| | a2 | a2-2 | | | | | | 7 | 6 | |
| | | a2-6 | 15 | 15 | 12 | | | | | |
| | | a2-7 | | | | 15 | 12 | | | |
| | | a2-9 | | | | | | 4 | 2 | |
| | | a2-13 | 7 | 9 | 5 | | | | | |
| | | a2-14 | | | | 9 | 5 | | | |
| | | a2-16 | | | | | | 2 | 1 | |
| | | a2-20 | 3 | 4 | 1 | | | | | |
| | | a2-21 | | | | 4 | 1 | | | |
| | | a2-23 | | | | | | 1 | 1 | |
| | | a2-27 | 1 | 1 | 1 | | | | | |
| | | a2-28 | | | | 1 | 1 | | | |
| | | a2-30 | | | | | | 1 | 1 | |
| | | a2-34 | | 1 | 1 | | | | | |
| | | a2-35 | | | | 1 | 1 | | | |
| Monomer (b) | b1 | triisopropylsilyl acrylate | | | | | | 30 | | |
| | | triisopropylsilyl methacrylate | | | | | | | 30 | 60 |
| | b2 | methyl methacrylate | 20 | 30 | 35 | 30 | 30 | 35 | 30 | 20 |
| | | 2-methoxyethyl acrylate | | 10 | 5 | | 10 | | 10 | 10 |
| | | 2-methoxyethyl methacrylate | 4 | | | | | 5 | | 5 |
| | | n-butyl acrylate | | | | 10 | | | | 5 |
| Total of monomers | | | 100 | 100 | 100 | 100 | 100 | 100 | 100 | 100 |
| Solvent | | xylene | 30 | 60 | 70 | 35 | 30 | 75 | 70 | 70 |
| | | 1-butanol | 30 | 20 | | | | | | |
| | | butyl acetate | | | 10 | 30 | 30 | | | |
| Polymerization initiator (initial) | | 1,1,3,3-tetramethylbutylperoxy-2-ethylhexanoate | 1.8 | 2.7 | 4.4 | 3.5 | 2.2 | 2.1 | 3.2 | 3.2 |
| Polymerization initiator (post-added) | | 1,1,3,3-tetramethylbutylperoxy-2-ethylhexanoate | 0.1 × 3 | 0.1 × 3 | 0.1 × 3 | 0.1 × 3 | 0.1 × 3 | 0.1 × 3 | 0.1 × 3 | 0.1 × 3 |
| Weight-average molecular weight (Mw) | | | 16,300 | 11,000 | 5,600 | 6,800 | 15,500 | 14,500 | 9,700 | 9,700 |
| Non-volatile matter (%, 125°C, 1 hour) | | | 62.8 | 55.9 | 55.7 | 61.2 | 63.4 | 57.1 | 59.1 | 59.1 |
| Copolymer solution name | | | A-17 | A-18 | A-19 | A-20 | A-21 | A-22 | A-23 | B-1 |

**[Table 8]**

| Table 8 | | | Copolymer Solution Production Example | | | |
|---|---|---|---|---|---|---|
| | | | P25 | P26 | P27 | P28 |
| Monomer (a) | | a1-1 | 28 | | | |
| | | a1-2 | | 12 | | |
| | | a1-3 | | | 16 | |
| | | a1-4 | | | | 22 |
| | a2 | a2-1 | 22 | | | |
| | | a2-2 | | 24 | | |
| | | a2-3 | | | 12 | |
| | | a2-4 | | | | 19 |
| | | a2-8 | 6 | | | |
| | | a2-9 | | 16 | | |
| | | a2-10 | | | 3 | |
| | | a2-11 | | | | 12 |
| | | a2-15 | 2 | | | |
| | | a2-16 | | 8 | | |
| | | a2-17 | | | 2 | |
| | | a2-18 | | | | 6 |
| | | a2-22 | 1 | | | |
| | | a2-23 | | 3 | | |
| | | a2-24 | | | 1 | |
| | | a2-25 | | | | 3 |
| | | a2-29 | 1 | | | |
| | | a2-30 | | 1 | | |
| | | a2-31 | | | 1 | |
| | | a2-32 | | | | 1 |
| Monomer (b) | b2 | methyl methacrylate | 30 | 26 | 45 | 30 |
| | | 2-methoxyethyl acrylate | 10 | | 5 | |
| | | 2-methoxyethyl methacrylate | | 10 | 10 | |
| | | n-butyl acrylate | | | 5 | 7 |
| Total of monomers | | | 100 | 100 | 100 | 100 |
| Solvent | | xylene | 50 | 100 | 100 | 100 |
| | | propylene glycol monomethyl ether | 50 | | | |
| Polymerization initiator (initial) | | 1,1,3,3-tetramethylbutylperoxy-2-ethylhexanoate | 1.3 | 0.2 | 0.2 | 0.9 |
| Polymerization initiator (post-added) | | 1,1,3,3-tetramethylbutylperoxy-2-ethylhexanoate | 0.1 × 3 | 0.1 × 3 | 0.1 × 3 | 0.1 × 3 |
| Weight-average molecular weight (Mw) | | | 28,500 | 48,000 | 49,500 | 31,000 |
| Non-volatile matter (%, 125°C, 1 hour) | | | 51.2 | 51.1 | 50.8 | 51.4 |
| Copolymer solution name | | | R-1 | R-2 | R-3 | R-4 |

### 1-4. Other Production Examples

### <Production Example D1 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hour to obtain a xylene solution of gum rosin (brown transparent liquid, solid content: 50%). The non-volatile matter of the resulting solution was 50.3%.

### <Production Example D2 (Production of Hydrogenated Rosin Solution)>

A xylene solution of hydrogenated rosin (brown transparent liquid, solid content: 50%) was obtained in the same manner as in Production Example D1, except that Chinese gum rosin (WW) in Production Example D1 was changed to hydrogenated rosin. The non-volatile matter of the resulting solution was 50.1%.

### <Production Example D3 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of gum rosin zinc salt (dark brown transparent liquid, solid content 50%). The non-volatile matter of the resulting solution was 50.2%.

### <Production Example D4 (Production of Hydrogenated Rosin Zinc Salt Solution)>

A xylene solution of hydrogenated rosin zinc salt (dark brown transparent liquid, solid content: 50%) was obtained in the same manner as in Production Example D3, except that Chinese gum rosin (WW) in Production Example D3 was changed to hydrogenated rosin. The non-volatile matter of the resulting solution was 50.5%.

### 2. Examples 1 to 36 and Comparative Examples 1 to 4 (Production of Coating Composition)

The components shown in Tables 9 to 13 were blended in the proportions (% by mass) shown in the same tables, and the coating compositions were produced by mixing and dispersing the mixture with glass beads of 1.5 to 2.5 mm in diameter. The VOC content in the tables is a value obtained by measuring by the method described in "1-3. Volatile Organic Compound (VOC)".

**[Table 9]**

| Table 9 | | | Example | | | | | | | |
|---|---|---|---|---|---|---|---|---|---|---|
| | | | 1 | 2 | 3 | 4 | 5 | 6 | 7 | 8 |
| Copolymer A | copolymer solution A-1 | | 25 | | | | | | | |
| | copolymer solution A-2 | | | 25 | | | | | | |
| | copolymer solution A-3 | | | | 25 | | | | | |
| | copolymer solution A-4 | | | | | 25 | | | | |
| | copolymer solution A-5 | | | | | | 25 | | | |
| | copolymer solution A-6 | | | | | | | 25 | | |
| | copolymer solution A-7 | | | | | | | | 25 | |
| | copolymer solution A-8 | | | | | | | | | 25 |
| Release modifier | hydrogenated rosin zinc salt solution | | 6 | | | | | | | 6 |
| | gum rosin zinc salt solution | | | | 6 | | 6 | | 6 | |
| | gum rosin solution | | | | | | | | | |
| | hydrogenated rosin solution | | | 6 | | 6 | | 6 | | |
| Antifouling agent | cuprous oxide | | 48 | 48 | 48 | 48 | 48 | 48 | 48 | 48 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 5 | 5 | 5 | 5 | 5 | 5 | 5 | 5 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 0.2 | 0.2 | 0.2 | 0.2 | 0.2 | 0.2 | 0.2 | 0.2 |
| | Disparlon 4200-20 | | 0.2 | 0.2 | 0.2 | 0.2 | 0.2 | 0.2 | 0.2 | 0.2 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| | chlorinated paraffin | | | | | | | | | |
| Solvent | xylene | | 2 | 2 | 2 | 2 | 2 | 2 | 2 | 2 |
| | 1-butanol | | | | | 1 | 1 | 1 | 1 | 1 |
| | isobutyl acetate | | 1 | 1 | 1 | | | | | |
| Total | | | 100 | 100 | 100 | 100 | 100 | 100 | 100 | 100 |
| VOC content g/L | | | 358 | 335 | 342 | 359 | 327 | 349 | 340 | 351 |
| Coating material viscosity (KU value/25°C) | | | 101 | 99 | 98 | 94 | 91 | 95 | 97 | 93 |
| Test Example 1 Rotary Test | average coating film dissolution amount (µm/ month) | initial to 6 months | 8.7 | 6.2 | 8.6 | 7.8 | 8.5 | 9.8 | 8.9 | 7.5 |
| | | 6 to 12 months | 7.9 | 5.8 | 6.1 | 6.8 | 7.8 | 8.9 | **7.4** | 6.9 |
| | | 12 to 18 months | 8.3 | 5.2 | 7.0 | 6.6 | 7.5 | 9.9 | 7.5 | 8.8 |
| | | 18 to 24 months | 7.2 | 4.7 | 6.5 | 7.8 | 7.5 | 10.2 | 8.8 | 7.8 |
| | coating film condition after 24 months | | AA | AA | AA | AA | AA | AA | AA | AA |
| Test Example 2 Antifouling Test | after 12 months | | AA | AA | AA | AA | AA | AA | AA | AA |
| | after 24 months | | A | A | A | A | A | A | A | A |
| Test Example 3 Coating Film Drying Property Test | after 1 day | | A | A | A | A | A | A | A | A |
| | after 2 days | | A | A | A | A | A | A | A | A |

**[Table 10]**

| Table 10 | | | Example | | | | | | | |
|---|---|---|---|---|---|---|---|---|---|---|
| | | | 9 | 10 | 11 | 12 | 13 | 14 | 15 | 16 |
| Copolymer A | copolymer solution A-9 | | 25 | | | | | | | |
| | copolymer solution A-10 | | | 25 | | | | | | |
| | copolymer solution A-11 | | | | 25 | | | | | |
| | copolymer solution A-12 | | | | | 25 | | | | |
| | copolymer solution A-13 | | | | | | 25 | | | |
| | copolymer solution A-14 | | | | | | | 25 | | |
| | copolymer solution A-15 | | | | | | | | 25 | |
| | copolymer solution A-16 | | | | | | | | | 25 |
| Release modifier | hydrogenated rosin zinc salt solution | | | | | | 6 | | | |
| | gum rosin zinc salt solution | | 6 | 6 | | 6 | | 6 | 6 | |
| | gum rosin solution | | | | 6 | | | | | 6 |
| | hydrogenated rosin solution | | | | | | | | | |
| Antifouling agent | cuprous oxide | | 48 | 48 | 48 | 48 | 48 | 48 | 48 | 48 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 5 | 5 | 5 | 5 | 5 | 5 | 5 | 5 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 0.2 | 0.2 | 0.2 | 0.2 | 0.2 | 0.2 | 0.2 | 0.2 |
| | Disparlon 4200-20 | | 0.2 | 0.2 | 0.2 | 0.2 | 0.2 | 0.2 | 0.2 | 0.2 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| | chlorinated paraffin | | | | | | | | | |
| Solvent | xylene | | 3 | 3 | 2 | 2 | 2 | 2 | 2 | 2 |
| | 1-butanol | | | | | 1 | | | | 1 |
| | isobutyl acetate | | | | 1 | | 1 | 1 | 1 | |
| Total | | | 100 | 100 | 100 | 100 | 100 | 100 | 100 | 100 |
| VOC content g/L | | | 353 | 342 | 320 | 352 | 350 | 348 | 351 | 319 |
| Coating material viscosity (KU value/25°C) | | | 89 | 93 | 97 | 100 | 91 | 96 | 102 | 99 |
| Test Example 1 Rotary Test | average coating film dissolution amount (µ m/month) | initial to 6 months | 4.5 | 5.0 | 4.2 | 2.5 | 6.7 | 7.5 | 2.8 | 3.2 |
| | | 6 to 12 months | 4.2 | 4.2 | 3.6 | 1.7 | 5.5 | 5.8 | 3.3 | 4.1 |
| | | 12 to 18 months | 3.6 | 6.5 | 3.9 | 1.7 | 5.8 | 6.7 | 3.6 | 5.0 |
| | | 18 to 24 months | 3.5 | 5.0 | 3.5 | 1.6 | 7.5 | 6.8 | 2.1 | 5.1 |
| | coating film condition after 24 months | | AA | AA | AA | AA | AA | AA | A | A |
| Test Example 2 Antifouling Test | after 12 months | | AA | AA | AA | AA | AA | AA | AA | AA |
| | after 24 months | | A | A | A | A | A | A | A | A |
| Test Example 3 Coating Film Drying Property Test | after 1 day | | A | A | A | A | A | A | A | A |
| | after 2 days | | A | A | A | A | A | A | A | A |

**[Table 11]**

| Table 11 | | | Example | | | | | | | |
|---|---|---|---|---|---|---|---|---|---|---|
| | | | 17 | 18 | 19 | 20 | 21 | 22 | 23 | 24 |
| Copolymer A | copolymer solution A-17 | | 25 | | | | | | | |
| | copolymer solution A-18 | | | 25 | | | | | | |
| | copolymer solution A-19 | | | | 25 | | | | | |
| | copolymer solution A-20 | | | | | 25 | | | | |
| | copolymer solution A-21 | | | | | | 25 | | | |
| | copolymer solution A-22 | | | | | | | 25 | | |
| | copolymer solution A-23 | | | | | | | | 25 | |
| | copolymer solution A-6 | | | | | | | | | 15 |
| Copolymer B | copolymer solution B-1 | | | | | | | | | 10 |
| Release modifier | hydrogenated rosin zinc salt solution | | | 6 | | | 6 | | | |
| | gum rosin zinc salt solution | | | | | 6 | | | 6 | 6 |
| | gum rosin solution | | 6 | | 6 | | | 6 | | |
| | hydrogenated rosin solution | | | | | | | | | |
| Antifouling agent | cuprous oxide | | 48 | 48 | 48 | 48 | 48 | 48 | 48 | 48 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 5 | 5 | 5 | 5 | 5 | 5 | 5 | 5 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 0.2 | 0.2 | 0.2 | 0.2 | 0.2 | 0.2 | 0.2 | 0.2 |
| | Disparlon 4200-20 | | 0.2 | 0.2 | 0.2 | 0.2 | 0.2 | 0.2 | 0.2 | 0.2 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| | chlorinated paraffin | | | | | | | | | |
| Solvent | xylene | | 2 | 2 | 2 | 2 | 2 | 2 | 3 | 3 |
| | 1-butanol | | 1 | 1 | | | | 1 | | |
| | isobutyl acetate | | | | 1 | 1 | 1 | | | |
| Total | | | 100 | 100 | 100 | 100 | 100 | 100 | 100 | 100 |
| VOC content g/L | | | 320 | 350 | 352 | 330 | 318 | 347 | 339 | 345 |
| Coating material viscosity (KU value/25°C) | | | 104 | 100 | 92 | 93 | 99 | 92 | 89 | 99 |
| Test Example 1 Rotary Test | average coating film dissolution amount (µm/month) | initial to 6 months | 2.2 | 2.8 | 3.1 | 6.5 | 5.5 | 5.0 | 2.1 | 1.9 |
| | | 6 to 12 months | 1.9 | 3.2 | 3.3 | 7.5 | 6.5 | 5.2 | 1.9 | 3.3 |
| | | 12 to 18 months | 3.2 | 2.1 | 4.2 | 5.8 | 4.8 | 7.5 | 3.5 | 2.3 |
| | | 18 to 24 months | 1.1 | 2.6 | 4.2 | 6.5 | 4.2 | 7.9 | 3.6 | 3.3 |
| | coating film condition after 24 months | | A | A | A | A | A | AA | AA | AA |
| Test Example 2 Antifouling Test | after 12 months | | AA | AA | AA | AA | AA | AA | AA | AA |
| | after 24 months | | A | A | A | A | A | A | A | A |
| Test Example 3 Coating Film Drying Property Test | after 1 day | | A | A | A | A | A | B | B | B |
| | after 2 days | | A | A | A | A | A | A | A | A |

**[Table 12]**

| Table 12 | | | Example | | | | | | | |
|---|---|---|---|---|---|---|---|---|---|---|
| | | | 25 | 26 | 27 | 28 | 29 | 30 | 31 | 3.2 |
| Copolymer A | copolymer solution A-1 | | 15 | | | | | | | |
| | copolymer solution A-5 | | | 15 | | | | | | |
| | copolymer solution A-7 | | | | 15 | | | | | |
| | copolymer solution A-9 | | | | | 15 | | | | |
| | copolymer solution A-13 | | | | | | 15 | | | |
| | copolymer solution A-14 | | | | | | | 15 | | |
| | copolymer solution A-18 | | | | | | | | 15 | |
| | copolymer solution A-20 | | | | | | | | | 15 |
| Release modifier | hydrogenated rosin zinc salt solution | | 12 | | 12 | | | 12 | | |
| | gum rosin zinc salt solution | | | 12 | | | | | 12 | |
| | gum rosin solution | | | | | 12 | | | | |
| | hydrogenated rosin solution | | | | | | 12 | | | 12 |
| Antifouling agent | cuprous oxide | | 35 | 35 | 35 | 35 | 35 | 35 | 35 | 35 |
| | copper pyrithione | | 2 | 2 | 2 | 2 | 2 | 2 | 2 | 2 |
| Pigment | red iron oxide | | 4 | 4 | 4 | 4 | 4 | 4 | 4 | 4 |
| | tale | | 13 | 13 | 13 | 13 | 13 | 13 | 13 | 13 |
| | zinc oxide | | 10 | 10 | 10 | 10 | 10 | 10 | 10 | 10 |
| | titanium oxide | | 1 | 1 | 1 | 1 | 1 | 1 | 1 | 1 |
| Other additives | Disparlon A603-20X | | 0.2 | 0.2 | 0.2 | 0.2 | 0.2 | 0.2 | 0.2 | 0.2 |
| | Disparlon 4200-20 | | 0.2 | 0.2 | 0.2 | 0.2 | 0.2 | 0.2 | 0.2 | 0.2 |
| | tetraethoxysilane | | 0.5 | 0.5 | 0.5 | 0.5 | 0.5 | 0.5 | 0.5 | 0.5 |
| | tricresyl phosphate | | 2 | | 2 | | 2 | | 2 | |
| | chlorinated paraffin | | | 2 | | 2 | | 2 | | 2 |
| Solvent | xylene | | 3 | 3 | 3 | 3 | 3 | 3 | 3 | 3 |
| | 1-butanol | | | 2 | | 2 | 2 | 2 | | |
| | isobutyl acetate | | 2 | | 2 | | | | 2 | 2 |
| Total | | | 100 | 100 | 100 | 100 | 100 | 100 | 100 | 100 |
| VOC content g/L | | | 372 | 350 | 359 | 367 | 365 | 362 | 364 | 351 |
| Coating material viscosity (KU value/25°C) | | | 102 | 86 | 91 | 85 | 84 | 92 | 98 | 103 |
| Test Example 1 Rotary Test | average coating film dissolution amount (µ m/month) | initial to 6 months | 8.3 | 7.3 | 6.5 | 3.3 | 5.8 | 6.5 | 3.2 | 6.8 |
| | | 6 to 12 months | 8.4 | 6.5 | 4.5 | 4.2 | 4.9 | 5.8 | 2.8 | 5.0 |
| | | 12 to 18 months | 5.5 | 6.2 | 3.8 | 3.5 | 4.8 | 5.8 | 0.8 | 3.2 |
| | | 18 to 24 months | 4.6 | 6.3 | 4.2 | 2.8 | 5.0 | 5.9 | 0.9 | 1.8 |
| | coating film condition after 24 months | | A | AA | AA | A | AA | AA | A | A |
| Test Example 2 Antifouling Test | after 12 months | | AA | AA | AA | AA | AA | AA | AA | AA |
| | after 24 months | | A | A | A | A | A | A | A | A |
| Test Example 3 Coating Film Drying Property Test | after 1 day | | A | A | A | A | A | A | A | A |
| | after 2 days | | A | A | A | A | A | A | A | A |

**[Table 13]**

| Table 13 | | | Example | | | | Comparative Example | | | |
|---|---|---|---|---|---|---|---|---|---|---|
| | | | 33 | 34 | 35 | 36 | 1 | 2 | 3 | 4 |
| Copolymer A | copolymer solution A-1 | | 25 | | | | | | | |
| | copolymer solution A-5 | | | 25 | | | | | | |
| | copolymer solution A-9 | | | | 20 | | | | | |
| | copolymer solution A-13 | | | | | 20 | | | | |
| | copolymer solution R-1 | | | | | | 25 | | | |
| | copolymer solution R-2 | | | | | | | 25 | | |
| | copolymer solution R-3 | | | | | | | | 25 | |
| | copolymer solution R-4 | | | | | | | | | 25 |
| Release modifier | hydrogenated rosin zinc salt solution | | 6 | | 9 | | | | | |
| | gum rosin zinc salt solution | | | | | 9 | | | | |
| | gum rosin solution | | | 6 | | | 6 | 6 | 6 | 6 |
| Antifouling agent | cuprous oxide | | 48 | 45 | | | 48 | 48 | 48 | 48 |
| | copper pyrithione | | 3 | 1 | | 1 | 3 | 3 | 3 | 3 |
| | Sea Nine | | | 1 | | 1 | | | | |
| | Zineb | | | 1 | | 1 | | | | |
| | zinc pyrithione | | | | 5 | 4 | | | | |
| | ECONEA 028 | | | 1 | 7 | 4 | | | | |
| | medetomidine | | | 1 | | 1 | | | | |
| Pigment | red iron oxide | | 2 | 2 | 10 | 10 | 2 | 2 | 2 | 2 |
| | talc | | 5 | 7 | 17 | 17 | 5 | 5 | 5 | 5 |
| | zinc oxide | | 4 | 4 | 20 | 20 | 4 | 4 | 4 | 4 |
| | titanium oxide | | 1 | 1 | 1 | 1 | 1 | 1 | 1 | 1 |
| Other additives | Disparlon A603-20X | | 0.2 | 0.2 | 0.2 | 0.2 | 0.2 | 0.2 | 0.2 | 0.2 |
| | Disparlon 4200-20 | | 0.2 | 0.2 | 0.2 | 0.2 | 0.2 | 0.2 | 0.2 | 0.2 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| Solvent | xylene | | 2 | 2 | 8 | 8 | 2 | 2 | 2 | 2 |
| | 1-butanol | | | | | | 1 | | 1 | |
| | isobutyl acetate | | 1 | | | | | 1 | | 1 |
| Total | | | 100 | 100 | 100 | 100 | 100 | 100 | 100 | 100 |
| VOC content g/L | | | 355 | 317 | 371 | 382 | 383 | 386 | 377 | 374 |
| Coating material viscosity (KU value/25°C) | | | 102 | 91 | 94 | 91 | 125 | 135 | 138 | 120 |
| Test Example 1 Rotary Test | average coating film dissolution amount (µ m/month) | initial to 6 months | 7. 5 | 5.1 | 6.7 | 5.0 | 5.2 | 4.5 | 5.2 | 3.8 |
| | | 6 to 12 months | 8. 5 | 4.2 | 6.8 | 5.1 | 4.8 | 3.5 | 6.2 | 4.8 |
| | | 12 to 18 months | 7. 9 | 5.8 | 8.3 | 6.7 | 4.5 | 3.2 | 5.3 | 5.6 |
| | | 18 to 24 months | 7. 5 | 5.1 | 9.0 | 8.3 | 5.0 | 3.0 | 4.9 | 4.5 |
| | coating film condition after 24 months | | AA | AA | AA | AA | A | AA | A | AA |
| Test Example 2 Antifouling Test | after 12 months | | AA | AA | AA | AA | A | AA | A | AA |
| | after 24 months | | A | A | A | A | A | A | A | A |
| Test Example 3 Coating Film Drying Property Test | after 1 day | | B | A | B | A | C | C | C | C |
| | after 2 days | | A | A | A | A | B | C | B | C |

The details of the components in the table are as follows.

### <Release Modifier>

Hydrogenated rosin zinc salt solution: solution produced in Production Example D4 was used.

Gum rosin zinc salt solution: solution produced in Production Example D3 was used.

Gum rosin solution: solution produced in Production Example D1 was used.

Hydrogenated rosin solution: solution produced in Production Example D2 was used.

### <Antifouling Agent>

Cuprous oxide: product name "NC-301" (manufactured by Nissin Chemco Ltd.)
Copper pyrithione: product name "Copper Omadine" (manufactured by Lonza Group AG)
Sea Nine: product name "SEA-NINE 211", 4,5-dichloro-2-octyl-4-isothiazolin-3-one (manufactured by Rohm & Haas), active ingredient 30% xylene solution
Zineb: [ethylenebis(dithiocarbamate)] zinc (manufactured by Ouchi Shinko Chemical Industrial Co., Ltd.)
Zinc pyrithione: (manufactured by Lonza Group AG)
Econea 028: product name "Econea 028" 2-(p-chlorophenyl)-3-cyano-4-bromo-5-trifluoromethylpyrrole (manufactured by Janssen PMP)
Medetomidine: (±)-4-[1-(2,3-dimethylphenyl)ethyl]-1H-imidazole (manufactured by Wako Pure Chemical Industries, Ltd.)

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: amide thixotropic agent, product name "Disparlon A603-20X" (manufactured by Kusumoto Chemicals, Ltd.)
Disparlon 4200-20: polyethylene oxide thixotropic agent, product name "Disparlon 4200-20" (manufactured by Kusumoto Chemicals, Ltd.)
Tetraethoxysilane: product name "Ethyl Silicate 28" (manufactured by Colcoat Co., Ltd.)
Tricresyl phosphate: (manufactured by Daihachi Chemical Industry Co., Ltd.)
Chlorinated paraffin: product name "Paraffin Chlorinated (Cl: 40%)" (manufactured by Wako Pure Chemical Industries, Ltd.)

### 3. Test

The coating compositions of Examples and Comparative Examples were subjected to the following tests.

The evaluation results are shown in Tables 9 to 13.

All Comparative Examples did not show good results in any of the rotary test, the antifouling test, and the coating film drying property test, compared to Examples.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 300 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 25°C and at 8.0 to 8.2, respectively, and the seawater was replaced every two weeks.

The initial film thickness and remaining film thickness were measured at the initial stage and every 6 months after the start of the test for each of the testing plates using a shape measurement laser microscope VK-X100 manufactured by Keyence Corporation, and the dissolved coating film thickness was calculated from the difference between the two values, to obtain the coating film dissolution amount per month (µm/month). Further, when measuring the remaining film thickness after 24 months of the rotary test, the surface of each coating film was observed with naked eyes and a microscope to evaluate the surface condition of the coating film.

Evaluation of the coating film surface condition was made in accordance with the following criteria.
AA: No defects observed
A: Hairline cracks observed in less than 10% of the total surface area of the coating film
B: Hairline cracks observed in 10 to 30% of the total surface area of the coating film
C: Hairline cracks observed in 30% or more of the total surface area of the coating film
D: Coating film defects such as large cracks, blisters, or peel-offs (only the surface or a part of the edge of the coating film peels off), delamination (the entire coating film peels off, and no test coating film remains) observed

### <Test Example 2 (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Owase City, Mie Prefecture, Japan, and fouling of the test plates by adhered materials was observed after 12 months and 24 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime adhered thickly to the extent that the coating film surface was not visible and not removable even by strong wiping with a brush
C: Fouling organisms such as shellfish and algae adhered

### <Test Example 3 (Coating Film Drying Property Test)>

An epoxy tie coat was applied to a thickness of 120 µm as a dry coating film on a steel plate coated with an anti-corrosion coating material, and dried. The antifouling coating material thus prepared was applied thereon such that the thickness of the dry coating film was about 150 µm, and the operation of drying for 1 day was repeated twice to prepare a test plate having a dry film thickness of 300 µm. The test plate was dried at room temperature for 1 or 2 days, a 30 mm × 30 mm × 10 mm model board was placed on the coating film surface to press the coating film in a vertical direction with 40 kgf/cm² for 20 minutes, and the surface condition of the coating film after removing the block was observed. Evaluation was made in accordance with the following criteria. If the drying property of the antifouling coating material is poor, the coating film deforms significantly when the model board is removed, which is undesirable. In Comparative Examples 1 to 4, the drying property is poor, resulting in deformation of the coating film, which is undesirable.
A: Trace of block observed
B: Area around the block deformed, and swelling on the coating film observed
C: Area around the block notably deformed, and substantial swelling on the coating film observed.

## Claims

1. An antifouling coating composition comprising:
a copolymer A; and
an antifouling agent,
wherein the copolymer A is a copolymer of a monomer (a) represented by the following general formula (1) and an ethylenically unsaturated monomer (b) other than the monomer (a), and the monomer (a) is constituted by a monomer (a1) and a monomer (a2),
the monomer (a1) is a compound represented by general formula (1) in which n is 1,
the monomer (a2) is a compound represented by general formula (1) in which n is 2 or more,
a content of the monomer (a1) in the monomer (a) is 50 to 80% by mass; and
the copolymer A has a weight-average molecular weight of 5,000 to 25,000, determined as described herein, 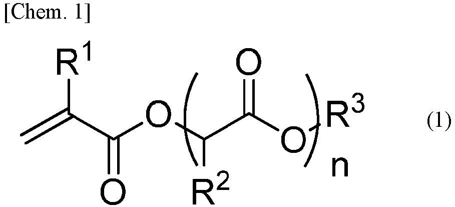
wherein R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

2. The antifouling coating composition of Claim 1, which has a volatile organic compound content of less than 400 g/L and has a viscosity at 25°C of 80 to 110 KU measured according to JIS K 5400.

## Patentansprüche

1. Antifouling-Beschichtungszusammensetzung, umfassend:
ein Copolymer A; und
ein Antifouling-Mittel,
wobei das Copolymer A ein Copolymer eines Monomers (a), das durch die folgende allgemeine Formel (1) dargestellt ist, und eines ethylenisch ungesättigten Monomers (b) ist, das nicht das Monomer (a) ist, und das Monomer (a) sich aus einem Monomer (a1) und einem Monomer (a2) zusammensetzt,
das Monomer (a1) eine Verbindung ist, die durch die allgemeine Formel (1) dargestellt ist, in der n 1 ist,
das Monomer (a2) eine Verbindung ist, die durch die allgemeine Formel (1) dargestellt ist, in der n 2 oder größer ist,
ein Gehalt des Monomers (a1) in dem Monomer (a) 50 bis 80 Massen-% beträgt; und
das Copolymer A ein gewichtsmittleres Molekulargewicht von 5.000 bis 25.000 aufweist, bestimmt wie hier beschrieben, 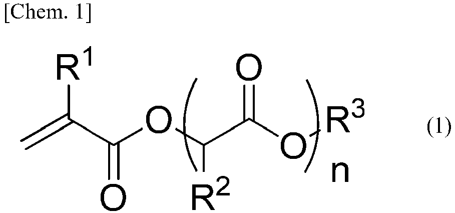
wobei R¹ Wasserstoff oder eine Methylgruppe darstellt, R² Wasserstoff, eine Methylgruppe oder eine Phenylgruppe darstellt, R³ eine Alkylgruppe mit 1 bis 8 Kohlenstoffatomen ist, die optional mit einer Alkoxygruppe mit 1 bis 8 Kohlenstoffatomen oder einer Phenylgruppe substituiert ist, oder eine Phenylgruppe darstellt, und n eine ganze Zahl von 1 bis 10 darstellt.

2. Antifouling-Beschichtungszusammensetzung nach Anspruch 1, die einen Gehalt an flüchtigen organischen Verbindungen von weniger als 400 g/l aufweist und eine Viskosität bei 25 °C von 80 bis 110 KU, gemessen gemäß JIS K 5400, aufweist.

## Revendications

1. Composition de revêtement antisalissure, comprenant :
un copolymère A ; et
un agent antisalissure,
dans laquelle le copolymère A est un copolymère d'un monomère (a) représenté par la formule générale (1) suivante et d'un monomère (b) à insaturation éthylénique autre que le monomère (a), et le monomère (a) est constitué d'un monomère (a1) et d'un monomère (a2),
le monomère (a1) est un composé représenté par la formule générale (1) dans laquelle n vaut 1,
le monomère (a2) est un composé représenté par la formule générale (1), dans laquelle n est égal à 2 ou plus,
une teneur en monomère (a1) dans le monomère (a) est de 50 à 80 % en masse ; et
le copolymère A présente un poids moléculaire moyen en poids de 5 000 à 25 000, déterminé tel que décrit ici, 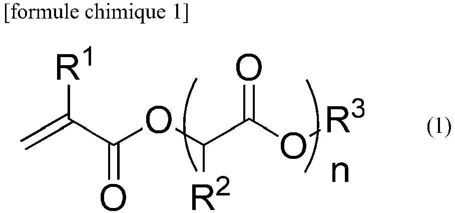
dans laquelle R¹ représente l'hydrogène ou un groupe méthyle, R² représente l'hydrogène, un groupe méthyle ou un groupe phényle, R³ est un groupe alkyle ayant de 1 à 8 atomes de carbone éventuellement substitué par un groupe alcoxy ayant de 1 à 8 atomes de carbone ou un groupe phényle, ou représente un groupe phényle, et n représente un nombre entier de 1 à 10.

2. Composition de revêtement antisalissure selon la revendication 1, qui présente une teneur en composés organiques volatils inférieure à 400 g/L et une viscosité à 25 °C de 80 à 110 KU, mesurée selon la norme JIS K 5400.
